# EUROPÄISCHE PATENTSCHRIFT

(11) **EP 1 110 880 B1**
(45) Veröffentlichungstag und Bekanntmachung des Hinweises auf die Patenterteilung: **19.05.2004**
(21) Anmeldenummer: 00122121.7
(22) Anmeldetag: 12.10.2000
(51) Int. Cl.: B65G 1/02, B65G 1/08, B65G 13/00

(54) **Förderstrecke, bestehend aus Rollenbahnleisten**
Conveyor line comprising rollerways
Ligne de transport comportant des chemins de roulement

(30) Priorität: 22.12.1999 DE 29922640 U
(43) Veröffentlichungstag der Anmeldung: 27.06.2001
(73) Patentinhaber: Fritz Schäfer Gesellschaft mit beschränkter Haftung, D-57290 Neunkirchen (DE)
(72) Erfinder: Schäfer, Gerhard, 57290 Neunkirchen (DE)
(74) Vertreter: Valentin, Ekkehard, Dipl.-Ing.

(56) Entgegenhaltungen:
- US-A- 3 095 956
- US-A- 3 312 320
- US-A- 4 119 190

## Beschreibung

Die Erfindung betrifft eine Förderstrecke, bestehend aus Rollenbahnleisten, für mit Waren beladene Behälter, z.B. Lager-, Transportkästen, Kartons oder dergleichen, insbesondere in Durchlaufregalen.

Durch die US 4 119 190 A ist es bekanntgeworden, in der geneigten Förderstrekke eines Schwerkraftförderers Stahlrollen und mit Kunststoff ummantelte Stahlrollen zur Bremsung der selbsttätig ablaufenden Transportbehälter wechselweise vorzusehen. Die Stahlrollen sind dabei gezielt angepaßt an die Abmessungen der Transportbehälter so angeordnet, daß die zum Stillstand gekommenen Transportbehälter mit bodenseitigen Laufleisten nur auf diesen Stahlrollen ruhen.

Derartige Rollenleisten bzw. Rollenbahnleisten kommen vorrangig in Durchlaufregalen für mit verschiedensten Waren beladene Behälter zum Einsatz. Ein beispielsweise durch die DE 195 48 959 C2 bekanntgewordenes Durchlaufregal besitzt in mehreren Etagen übereinander sowie in jeder Etage zu mehreren nebeneinander angeordnete, geneigte Laufbahnen für die Behälter. Jede Laufbahn besteht aus Rollenbahnleisten, die im Abstand und in einer Reihe hintereinander frei drehbare Röllchen bzw. Rollen besitzen, die meist als Zylinderrolle oder als Spurkranzrolle ausgebildet sind und üblich in einem meiste verzinkten, die Leiste bildenden Stahlblechprofil lagern. Die Rollen - aus Stahl, vorzugsweise aus Kunststoff - sind an den jeweiligen Belastungsfall angepaßt und dienen als Stütz- und Führungselemente für die Behälter bzw. Kästen.

Um den auftretenden Belastungsfällen entsprechen zu können, sind Rollen aus Kunststoff mit durchgeführter Stahlachse, Vollkunststoff-Rollen sowie bei sehr hohen Belastungen Stahlrollen bekannt. Es sind aber stets gleiche bzw. gleichartige Rollen in den Rollenbahnleisten angeordnet.

Der Erfindung liegt daher die Aufgabe zugrunde, bei einer Förderstrecke der eingangs genannten Art die Rollenbahnleiste variabler zu gestalten.

Diese Aufgabe wird erfindungsgemäß durch die im kennzeichnenen Teil des unabhängigen Anspruchs angegebenen Merkmale gelöst. Damit läßt sich in verblüffend einfacher Weise eine Förderstrecke schaffen, die hinsichtlich ihrer Rollen-Bestückung an die unterschiedlichen Belastungen angepaßt ist. Es lassen sich daher beispielsweise im Beschickungs- und Entnahmebereich Rollen anordnen, die höheren Belastungen standhalten, z.B. aufgrund einer eingelagerten Stahlachse oder durch Verwendung von gänzlich aus Stahl bestehenden Rollen, während in dem bzw. den übrigen Streckenabschnitten beispielsweise Vollkunststoff-Rollen angeordnet werden können, die zwar keine so hohen Belastungen erlauben, jedoch zu einem ruhigeren Lauf der zu fördernden Behälter führen.

Nach einem Vorschlag der Erfindung ist die Rollenbahnleiste mit gleichen Durchmessern ihrer Achslager ausgebildet. Dies bringt den Vorteil einer einheitlichen und damit weniger aufwendigen Fertigung des Rollenbahnleistenprofils mit sich, und gleichwohl ist es dennoch möglich, die Leiste entsprechend dem Anforderungsprofil mit verschieden belastbaren Röllchen zu bestücken.

Dies ist gemäß einer alternativen Ausführung, bei der die Rollenbahnleiste mit im Durchmesser unterschiedlichen Achslagern ausgebildet ist, ebenfalls möglich, erfordert dann aber einen höheren Fertigungsaufwand und außerdem die Bevorratung von Rollen mit verschiedenen Achsdurchmessem.

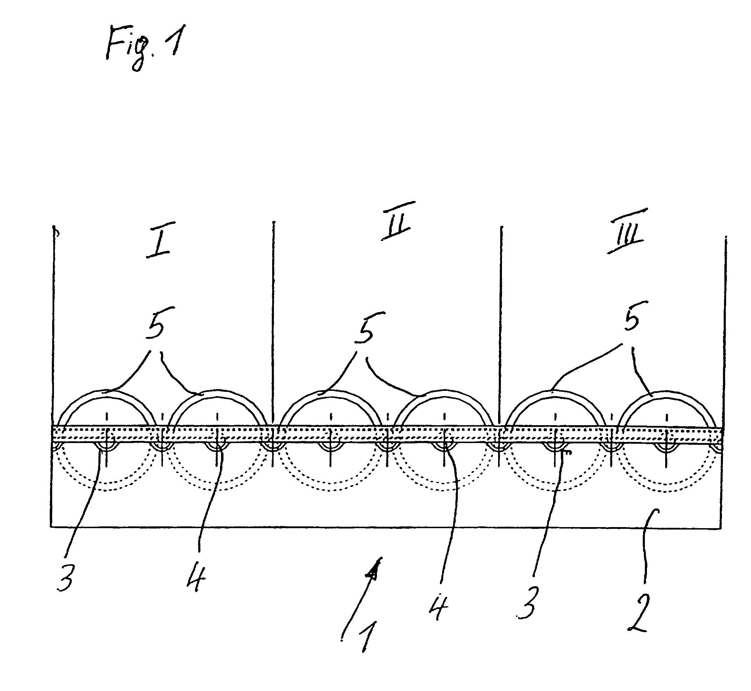

Weitere Einzelheiten und Vorteile der Erfindung ergeben sich aus den Ansprüchen und der nachfolgenden Beschreibung eines in der einzigen Zeichnung dargestellten Ausführungsbeispiels der Erfindung.

Von einer Förderstrecke, z.B. in einem hinlänglich bekannten Durchlaufregal, ist eine einzige Rollenbahnleiste 1 gezeigt. Diese besteht aus einem im Querschnitt U-förmigen Stahlblechprofil 2, das mit Achslagern 3 zur Aufnahme der Achsen 4 von Röllchen bzw. Rollen 5 ausgebildet ist. Die von der Rollenbahnleiste 1 definierte Förderstrecke ist in Abschnitte I bis III unterteilt, in denen unterschiedlich hohe dynamische Belastungen während des Transports auftreten, die beispielsweise im Beschickungs- und Entnahmebereich I bzw. III höher sind als in dem übrigen Streckenabschnitt II. An diese unterschiedlichen Belastungen angepaßt, sind in den Streckenabschnitten I und III Rollen 5 eingesetzt, die eine höhere Traglast besitzen, als die im Streckenabschnitt II vorhandenen Rollen 5.

Damit ist es möglich, die Förderstrecke bzw. Rollenbahnleiste 1 von vornherein so mit Rollen 5 zu bestücken, daß bedarfsgerecht nur in den Bereichen mit hoher dynamischer Belastung Rollen mit höherer Tragkraft angeordnet sind, während in den übrigen Bereichen weniger starke, dafür aber das definierte Laufverhalten positiv beeinflussende Rollen vorhanden sind.

## Patentansprüche

1. Förderstrecke, bestehend aus Rollenbahnleisten (1), für mit Waren beladene Behälter, z.B. Lager-, Transportkästen, Kartons oder dergleichen, insbesondere in Durchlaufregalen,
**dadurch gekennzeichnet,**
**daß** die Rollenbahnleiste (1) in Streckenabschnitte (I, II, III) mit unterschiedlich hoch dynamisch belasteten Bereichen unterteilt ist und belastungsabhängig mit Rollen (5) von mehr oder weniger Traglast bestückt ist, wobei einheitlich alle Rollen (5) im gesamten Beschickungs- und Entladebereich (I und III) für eine höhere Traglast als die Rollen (5) im übrigen, dazwischenliegenden Streckenabschnitt (II) der Rollenbahnleiste (1) ausgebildet sind.

2. Förderstrecke nach Anspruch 1,
**dadurch gekennzeichnet,**
**daß** die Rollenbahnleiste (1) mit gleichen Durchmessern ihrer Achslager (4) ausgebildet ist.

3. Förderstrecke nach Anspruch 1,
**dadurch gekennzeichnet,**
**daß** die Rollenbahnleiste (1) mit im Durchmesser unterschiedlichen Achslagem (4) ausgebildet ist.

## Claims

1. A conveying section, consisting of roller conveyor strips (1), for containers loaded with goods, e.g. storage cases, transport cases, cartons or suchlike, in particular in flow shelves,
**characterised in that**
the roller conveyor strip (1) is split up into section segments (I, II, III) with areas loaded dynamically to differing degrees and is equipped, independently of the loading, with rollers (5) of greater or lesser bearing load, whereby all the rollers (5) in the whole loading and unloading area (I and III) are uniformly designed for a higher bearing load than the rollers (5) in the remaining section segment (II) of the roller conveyor strip (1) lying between the latter.

2. The conveying section according to claim 1,
**characterised in that**
the roller conveyor strip (1) is designed with identical diameters of the axle bearings (4).

3. The conveying section according to claim 1,
**characterised in that**
the roller conveyor strip (1) is designed with axle bearings (4) differing in diameter.

## Revendications

1. Voie de transport, constituée de barres de transporteur à rouleaux (1), pour des récipients chargés de marchandises, par exemple des caisses de stockage ou de transport, des cartons ou d'autres objets analogues, notamment dans des casiers de stockage dynamique,
**caractérisée en ce que** la barre de transporteur à rouleaux (1) est divisée en sections (I, II, III) ayant des zones à charge dynamique différente et est équipée en fonction de la charge de rouleaux (5) supportant une plus ou moins grande charge, tous les rouleaux (5) dans toute la zone de chargement et de déchargement (I et III) étant conçus pour une charge plus grande que les rouleaux (5) dans la section restante (II), située entre les deux précédentes, de la barre de transporteur à rouleaux (1).

2. Voie de transport selon la revendication 1, **caractérisée en ce que** la barre de transporteur à rouleaux (1) est conçue avec des paliers (4) de diamètres identiques.

3. Voie de transport selon la revendication 1, **caractérisée en ce que** la barre de transporteur à rouleaux (1) est conçue avec des paliers (4) de diamètres différents.
